# EUROPEAN PATENT APPLICATION

(11) **EP 2 599 538 A1**
(43) Date of publication of application: **05.06.2013**
(21) Application number: 10855326.4
(22) Date of filing: 30.07.2010
(51) Int. Cl.: B01D 53/86

(54) **ELECTRICALLY-HEATED CATALYST**

(71) Applicant: Toyota Jidosha Kabushiki Kaisha, Toyota-shi, Aichi 471-8571 (JP)
(72) Inventor: YOSHIOKA, Mamoru, Toyota-shi, Aichi 471-8571 (JP); KUMAGAI, Noriaki, Toyota-shi, Aichi 471-8571 (JP); TAKAGI, Naoya, Toyota-shi, Aichi 471-8571 (JP)
(74) Representative: TBK
(86) International application number: PCT/JP2010/062914
(87) International publication number: WO 2012/014317

(57) **Abstract**

The electricity is suppressed from flowing through a case (5) of an electric heating catalyst (1). The electric heating catalyst (1) comprises a heat generating element (3) which generates heat by applying electricity; a case (5) which accommodates the heat generating element (3); a mat (6) which is provided between the heat generating element (3) and the case (5) and which insulates the electricity; and an inner tube (4) which is provided on an inner side as compared with the case (5) and on an outer side as compared with the heat generating element (3) and which is supported by the mat (6) while dividing the mat (6) into a part disposed on a case (5) side and a part disposed on a heat generating element (3) side; wherein distances between the inner tube (4) and the case (5) are provided such that the distance is required to support the inner tube (4) at a portion at which the mat (6) exists, and the distance is required to avoid occurrence of any electric discharge between the inner tube (4) and the case (5) at a portion at which the inner tube (4) protrudes from the mat (6).

## Description

### TECHNICAL FIELD

The present invention relates to an electric heating catalyst.

### BACKGROUND ART

A technique is known, in which a mat composed of an insulator is provided between a catalyst carrier which generates the heat by applying the electricity and a case which accommodates the catalyst carrier (see, for example, Patent Document 1). According to this mat, it is possible to suppress the electricity from flowing through the case when the electricity is applied to the catalyst carrier. In another situation, water contained in an exhaust gas is sometimes condensed on a wall surface of an exhaust tube, for example, immediately after the startup of an internal combustion engine. Water, which is in a liquid form, is allowed to flow toward the downstream side by being pushed by the exhaust gas, and water arrives at the catalyst. If water in the liquid form invades the inside of the mat, and water arrives at an electrode, then the insulation resistance between the electrode and the case is lowered. Therefore, it is feared that the electricity may flow from the electrode to the case.

### PRECEDING TECHNICAL DOCUMENT

### Patent Document:

Patent Document 1: JP05-269387A.

### SUMMARY OF THE INVENTION

### Task to Be Solved by the Invention:

The present invention has been made taking the foregoing problem into consideration, an object of which is to suppress the electricity from flowing through a case of an electric heating catalyst.

### Solution for the Task:

In order to achieve the object as described above, according to the present invention, there is provided an electric heating catalyst comprising:
a heat generating element which generates heat by applying electricity;
a case which accommodates the heat generating element;
a mat which is provided between the heat generating element and the case and which insulates the electricity; and
an inner tube which is provided on an inner side as compared with the case and on an outer side as compared with the heat generating element and which is supported by the mat while dividing the mat into a part disposed on a case side and a part disposed on a heat generating element side, wherein:
the inner tube protrudes from the mat; and
distances between the inner tube and the case are provided such that the distance is required to support the inner tube at a portion at which the mat exists, and the distance is required to avoid occurrence of any electric discharge between the inner tube and the case at a portion at which the inner tube protrudes from the mat.

The heat generating element (heat generator) may be a carrier for a catalyst (catalyst carrier), and the heat generating element may be provided on the upstream side from the catalyst. The heat generating element generates the heat by applying the electricity to the heat generating element. Accordingly, it is possible to raise the temperature of the catalyst. The inner tube (inner pipe) divides the mat into the part disposed on the case side and the part disposed on the heat generating element side. Therefore, the portions, in which the mat exists, are provided on the inner side and the outer side of the inner tube. Further, the inner tube is supported by the mat. Therefore, the inner tube is not brought in contact with the heat generating element and the case.

Water is contained in the exhaust gas of an internal combustion engine. Therefore, water is sometimes condensed, for example, on the case. The water flows along the inner surface of the case, and the water adheres to the mat. After that, the water is absorbed by the mat. In this arrangement, the inner tube protrudes from the mat, and thus the water, which flows along the inner surface of the case, hardly flows toward the heat generating element beyond the inner tube. Therefore, it is possible to suppress the formation of any short circuit between the heat generating element and the case at the front end and the back end of the heat generating element. Further, the temperature tends to increase at the portions at which the inner tube protrudes from the mat. Therefore, even when the particulate matter contained in the exhaust gas adheres, the particulate matter is immediately oxidized and removed. Accordingly, it is possible to suppress the short circuit formation which would be otherwise caused by the particulate matter adhered to the front end or the back end of the mat.

In this arrangement, the water, which is absorbed by the mat, is moved in the mat. However, the movement of water from the case side to the heat generating element side is intercepted or blocked by the inner tube. Accordingly, it is possible to suppress the short circuit formation which would be otherwise caused by water. Further, the water, which is absorbed by the mat, is evaporated by the heat of the exhaust gas or the heat of the heat generating element. Therefore, the water is removed when the time elapses. Further, the amount of water absorbed by the mat can be decreased by thinning the mat. Accordingly, it is possible to facilitate the evaporation of water. However, if the mat is excessively thinned, it is difficult to support the mat. Accordingly, the thickness of the mat is a minimum thickness required to support the inner tube. Accordingly, the distance between the inner tube and the case is determined at the portion at which the mat exists. On the other hand, if the distance between the inner tube and the case is determined in conformity with the thickness of the mat required to support the inner tube, it is feared that the electric discharge may be caused between the inner tube and the case at the portion at which the inner tube protrudes from the mat. In relation thereto, the minimum distance, which is required to avoid the occurrence of the electric discharge between the inner tube and the case, is secured at the portion at which the inner tube protrudes from the mat. That is, the distance between the inner tube and the case is changed between the portion at which the mat exists and the portion at which the inner tube protrudes from the mat. In this way, it is possible to support the inner tube while suppressing the electric discharge.

In the present invention, the inner tube may have a communication portion which makes communication between the case side and the heat generating element side at a portion at which the inner tube is brought in contact with the mat. The mat exists on both of the case side and the heat generating element side of the communication portion, because the communication portion makes communication between the case side and the heat generating element side at the portion of contact with the mat. Therefore, when a large amount of water is absorbed by the mat, then the water passes through the communication portion, and the water is moved from the mat disposed on the case side to the mat disposed on the heat generating element side. Accordingly, it is possible to suppress the water from arriving at the electrode. Therefore, it is possible to suppress the decrease in the insulation resistance between the electrode and the case. Further, the water, which has passed through the communication portion, more easily receives the heat of the exhaust gas and the heat of the heat generating element. Therefore, the water is evaporated more easily. Further, when the water is absorbed by the heat generating element, the evaporation of water is facilitated by means of the flow of the exhaust gas. Therefore, it is possible to remove the water more quickly.

In the present invention, a thickness of the inner tube can be increased at the portion at which the mat exists as compared with the portion at which the inner tube protrudes from the mat. When the thickness of the inner tube is changed as described above, the distance between the inner tube and the case can be changed between the portion at which the mat is provided and the portion at which the inner tube protrudes from the mat.

In the present invention, a thickness of the case can be increased at the portion at which the mat exists as compared with the portion at which the inner tube protrudes from the mat. When the thickness of the case is changed as described above, the distance between the inner tube and the case can be changed between the portion at which the mat is provided and the portion at which the inner tube protrudes from the mat.

In the present invention, the heat generating element can be composed of a material capable of absorbing water. Accordingly, the water, which invades the side of the heat generating element from the side of the case via the communication portion, is absorbed by the heat generating element. The water is moved in the heat generating element, and the water is removed from the heat generating element by the gas allowed to flow through the heat generating element. Accordingly, it is possible to quickly remove the water from the mat and the heat generating element.

### EFFECT OF THE INVENTION

According to the present invention, it is possible to suppress the electricity from flowing through the case of the electric heating catalyst.

### BRIEF DESCRIPTION OF THE DRAWINGS

Fig. 1 shows a schematic arrangement of an electric heating catalyst according to a first embodiment.
Fig. 2 shows a schematic arrangement of an electric heating catalyst according to a second embodiment.
Fig. 3 shows a schematic arrangement of an electric heating catalyst according to a third embodiment.

### MODE FOR CARRYING OUT THE INVENTION

Specified embodiments of the electric heating catalyst according to the present invention will be explained below on the basis of the drawings. The following embodiments can be appropriately combined with each other.

### First Embodiment

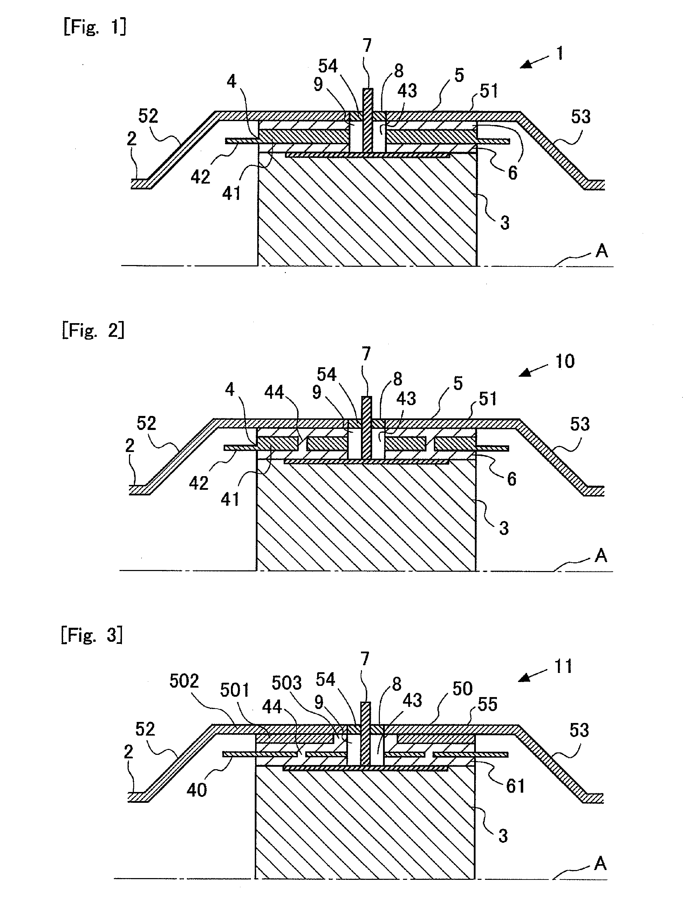

Fig. 1 shows a schematic arrangement of an electric heating catalyst 1 according to this embodiment. The electric heating catalyst 1 according to this embodiment is provided for an exhaust tube 2 of an internal combustion engine carried on a vehicle. The internal combustion engine may be either a diesel engine or a gasoline engine. Further, the electric heating catalyst 1 can be also used for a vehicle which adopts a hybrid system provided with an electric motor.

The electric heating catalyst 1 shown in Fig. 1 is depicted in a sectional view obtained by cutting the electric heating catalyst 1 in the vertical direction along the central axis A of the exhaust tube 2. The shape of the electric heating catalyst 1 is linearly symmetric with respect to the central axis A. Therefore, only an upper part is shown in Fig. 1.

The electric heating catalyst 1 according to this embodiment comprises a columnar or cylindrical catalyst carrier 3 which has the center of the central axis A. The catalyst carrier 3, an inner tube 4, and a case 5 are provided in this order as referred to from the side of the central axis A. A mat 6 is provided between the catalyst carrier 3 and the inner tube 4 and between the inner tube 4 and the case 5.

A material, which behaves as an electric resistor and which generates the heat by applying the electricity, is used for the catalyst carrier 3. For example, SiC is used as the material of the catalyst carrier 3. The catalyst carrier 3 has a plurality of passages which extend in the direction of the flow of the exhaust gas (i.e., in the direction of the central axis A) and which have a honeycomb-shaped form provided in the cross section perpendicular to the direction of the flow of the exhaust gas. The exhaust gas flows through the passages. The outer shape of the catalyst carrier 3 is, for example, a columnar shape provided about the center of the central axis A of the exhaust tube 2. The cross-sectional shape of the catalyst carrier 3, which is taken along the cross section perpendicular to the central axis A, may be, for example, elliptic. The central axis A is the common central axis of the exhaust tube 2, the catalyst carrier 3, the inner tube 4, and the case 5. In this embodiment, the catalyst carrier 3 corresponds to the heat generating element according to the present invention. This embodiment can be applied equivalently even when the heat generating element is provided on the upstream side from the catalyst.

The catalyst is carried on the catalyst carrier 3. The catalyst may be exemplified, for example, by the oxidation catalyst, the three way catalyst, the absorption reduction type NOx catalyst, and the selective reduction type NOx catalyst. Two electrodes 7 are connected to the catalyst carrier 3. The electricity is applied to the catalyst carrier 3 by applying the voltage between the electrodes 7. The catalyst carrier 3 generates the heat in accordance with the electric resistance of the catalyst carrier 3.

An electrically insulating material is used for the mat 6. For example, a ceramic fiber, which contains a main component of alumina, is used therefor. The mat 6 is wound around the outer circumferential surface of the catalyst carrier 3 and the outer circumferential surface of the inner tube 4. The mat 6 covers the outer circumferential surface of the catalyst carrier 3 (surface parallel to the central axis A). Therefore, the mat 6 suppresses the electricity from flowing through the inner tube 4 and the case 5 when the electricity is applied to the catalyst carrier 3.

An electrically insulating material, for example, alumina is used for the material of the inner tube 4. The inner tube 4 is formed to have a tube-shaped form about the center of the central axis A. The length in the direction of the central axis A of the inner tube 4 is longer than that of the mat 6. Therefore, the inner tube 4 protrudes from the mat 6 to the upstream side and the downstream side. The inner diameter of the inner tube 4 is substantially the same as the outer diameter of the mat 6 provided when the outer circumference of the catalyst carrier 3 is covered with the mat 6. When the mat 6 and the catalyst carrier 3 are accommodated in the inner tube 4, the mat 6 is compressed. Therefore, the catalyst carrier 3 is fixed at the inside of the inner tube 4 by means of the repulsive force of the mat 6.

The inner tube 4 has different thicknesses between a central portion 41 which is the portion brought in contact with the mat 6 and end portions 42 which are the portions allowed to protrude to the upstream side and the downstream side from the mat 6. The thicknesses are set so that the distance between the end portion 42 and the case 5 is longer than the distance between the central portion 41 and the case 5.

A metal is used as the material of the case 5. It is possible to use, for example, a stainless steel material. The case 5 is constructed to include an accommodating portion 51 which is constructed to include a curved surface parallel to the central axis A, and tapered portions 52, 53 which connect the accommodating portion 51 and the exhaust tube 2 on the upstream side and the downstream side from the accommodating portion 51. The catalyst carrier 3, the inner tube 4, and the mat 6 are accommodated at the inside of the accommodating portion 51. Each of the tapered portions 52, 53 has such a tapered shape that the cross-sectional area of the passage is decreased at positions separated farther from the accommodating portion 51. That is, the cross-sectional area is decreased on the more upstream side in relation to the tapered portion 52 disposed on the upstream side from the catalyst carrier 3. The cross-sectional area is decreased on the more downstream side in relation to the tapered portion 53 disposed on the downstream side from the catalyst carrier 3. The inner diameter of the accommodating portion 51 is substantially the same as the outer diameter of the mat 6 provided when the outer circumference of the inner tube 4 is covered with the mat 6. When the mat 6 and the inner tube 4 are accommodated in the accommodating portion 51, the mat 6 is compressed. Therefore, the inner tube 4 is fixed at the inside of the accommodating portion 51 by means of the repulsive force of the mat 6.

The two electrodes 7 are connected to the catalyst carrier 3. In order to allow the electrodes 7 to pass, holes 43, 54 are bored through the inner tube 4 and the case 5. Further, the mat 6 is not provided around the electrodes 7 until the electrodes 7 are connected to the catalyst carrier 3. An insulating material 8, which supports the electrode 7, is provided in the hole 54 bored through the case 5. The insulating material 8 is provided without forming any gap between the case 5 and the electrode 7. In this way, the space 9, which is closed around the electrode 7, is formed in the case 5.

In the electric heating catalyst 1 constructed as described above, the water, which is condensed on the upstream side from the catalyst carrier 3, flows along the inner walls of the exhaust tube 2 and the case 5, and the water adheres to the mat 6 in some cases. In this situation, the water flows along the inner wall of the accommodating portion 51. Therefore, the water adheres to the mat 6 disposed between the inner tube 4 and the accommodating portion 51. That is, the water is suppressed from entering the inside from the inner tube 4, because the inner tube 4 protrudes to the upstream side and the downstream side as compared with the mat 6. Accordingly, the short circuit formation is suppressed, which would be otherwise caused by the water between the case 5 and the catalyst carrier 3 at the upstream end and the downstream end of the mat 6.

If the particulate matter (hereinafter referred to as "PM"), which is contained in the exhaust gas, adheres to the mat 6 and/or the inner tube 4, it is feared that the short circuit may be formed by PM between the case 5 and the catalyst carrier 3. However, the inner tube 4 protrudes from the mat 6, and thus the heat of the exhaust gas is received to raise the temperature at the protruding portion. Therefore, PM, which adheres to the inner tube 4, can be oxidized and removed. Accordingly, the short circuit formation is suppressed, which would be otherwise caused by PM between the case 5 and the catalyst carrier 3.

The water, which adheres to the mat 6, is evaporated by the heat of the exhaust gas and the heat of the catalyst carrier 3. However, if the amount of adhered water is increased, then a part thereof is not evaporated immediately, and the part of water stays in the mat 6. The water passes through the mat 6 to arrive at the space 9 disposed around the electrode 7, and the water stays in the space 9 in some cases. The water, which exists in the space 9 as described above, is hardly removed, even when the evaporation is caused. If water vapor or steam exists in the space 9, the insulation resistance between the electrode 7 and the case 5 is greatly lowered. If such a situation arises, it is feared that the electricity cannot be applied, when it is requested to raise the temperature of the catalyst carrier 3.

In this arrangement, the longer the distance between the central portion 41 and the case 5 is, the thicker the mat 6 therebetween is. Therefore, the areal size, in which the mat 6 is exposed at the upstream end and the downstream end of the mat 6, is increased, and hence the water tends to be absorbed more easily. Further, if the staying amount of water is increased in the mat 6, a long period of time is required until all of the water is evaporated. Therefore, it is favorable that the mat 6, which exists between the inner tube 4 and the case 5, is thin. However, if the mat 6 is too thinned, it is difficult to support the inner tube 4. In view of the above, the distance between the central portion 41 and the case 5 is the minimum distance required to successfully support the inner tube 4. Accordingly, the distance between the central portion 41 and the case 5 is relatively shortened.

On the other hand, it is feared that the electric discharge may occur at the end portion 42 of the inner tube 4 if the distance between the end portion 42 and the case 5 is shortened. Therefore, if the end portion 42 is positioned near to the case 5 in conformity with the central portion 41, the electric discharge may occur. In view of the above, the distance between the end portion 42 and the case 5 is such a distance that the electric discharge can be avoided. Accordingly, the distance between the end portion 42 and the case 5 is longer than the distance between the central portion 41 and the case 5.

As described above, the required distance to arrive at the case 5 differs between the central portion 41 and the end portion 42 of the inner tube 4. Therefore, the outer circumferential surface of the inner tube 4 is formed so that the distances, which correspond to the respective requests, are provided at the central portion 41 and the end portion 42 of the inner tube 4. It is assumed that the distance from the central axis A to the inner circumferential surface of the inner tube 4, which is provided at the central portion 41, is the same as that provided at the end portion 42. That is, the thickness of the central portion 41 is increased in order that the central portion 41 is disposed near to the case 5 as compared with the end portion 42. Therefore, the step (difference in distance) is provided between the central portion 41 and the end portion 42.

As explained above, according to this embodiment, it is possible to thin the mat 6 between the inner tube 4 and the case 5. Therefore, it is possible to restrict the water absorbing power of the mat 6. Accordingly, it is possible to shorten the time required to remove water from the mat 6. Therefore, it is possible to suppress the electricity from flowing through the case 5.

In this embodiment, the thickness of the central portion 41 is increased. However, it is also appropriate that any other member, which does not have the water absorbing property, is attached to the outer circumferential surface of the inner tube 4 in place thereof.

### Second Embodiment

Fig. 2 shows a schematic arrangement of an electric heating catalyst 10 according to this embodiment. An explanation will be made about points or features different from those of the electric heating catalyst. 1 shown in the first embodiment. The members, which are the same as those of the electric heating catalyst 1 shown in the first embodiment, are designated by the same reference numerals.

A plurality of communication holes 44, which make communication between the side of the case 5 and the side of the catalyst carrier 3, are provided for an inner tube 4 according to this embodiment. The communication holes 44 are provided at portions at which the mat 6 and the inner tube 4 are brought in contact with each other. The diameter of the communication hole 44 is set to have such a size that the water, which is absorbed by the mat 6, can pass therethrough. In this embodiment, the communication hole 44 corresponds to the communication portion according to the present invention.

That is, the communication holes 44 allow the water to pass therethrough. Therefore, the water, which invades the mat 6 disposed at the outside of the inner tube 4, passes through the communication holes 44, and the water invades the mat 6 disposed at the inside of the inner tube 4. In this arrangement, the temperature of the catalyst carrier 3 is raised by the heat of the exhaust gas. Therefore, the water, which approaches the catalyst carrier 3, tends to be evaporated. Further, SiC has the large water absorbing power. Therefore, when the water arrives at the catalyst carrier 3, the water is absorbed by the catalyst carrier 3. The water is discharged from the' inside of the catalyst carrier 3 together with the exhaust gas allowed to flow through the catalyst carrier 3. In this way, it is possible to suppress the water from staying in the mat 6. Accordingly, it is possible to suppress the water from invading the space 9 disposed around the electrode 7. Therefore, it is possible to suppress the great decrease in the insulation resistance between the electrode 7 and the case 5.

Further, the timing, at which the water passes through the communication hole 44 and the water invades the inner side from the inner tube 4, can be regulated by regulating the position of the communication hole 44. For example, when the position of the communication hole 44 is disposed near to the electrode 7, then the water, which invades the mat 6, requires a certain period of time until the water passes through the communication hole 44, and hence it is possible to suppress the short circuit formation which would be otherwise caused by the water allowed to invade the mat 6. On the other hand, when the water, which invades the mat 6, is in a small amount, the water is evaporated until the water passes through the communication hole 44. That is, it is possible to allow the water to pass through the communication hole 44 only when it is feared that the water may invade the space 9. If the position of the communication hole 44 is disposed excessively near to the electrode 7, it is feared that the water may invade the space 9. The optimum position and the size of the communication hole 44 can be determined, for example, by means of an experiment.

As explained above, according to this embodiment, it is possible to suppress the water from staying in the space 9. Therefore, it is possible to suppress the flow of the electricity from the electrode 7 to the case 5.

### Third Embodiment

Fig. 3 shows a schematic arrangement of an electric heating catalyst 11 according to this embodiment. An explanation will be made about points or features different from those of the electric heating catalyst 1 shown in the first embodiment. The members, which are the same as those of the electric heating catalyst 1 shown in the first embodiment, are designated by the same reference numerals.

The electric heating catalyst 11 shown in Fig. 3 has shapes of an inner tube 40, a case 50, and a mat 61 which are different from those of the first embodiment. That is, an accommodating portion 55 of the case 50 has different thicknesses at a central portion 501 which is the portion brought in contact with the mat 61 and end portions 502 which are the portions not brought in contact with the mat 61. On the other hand, the inner tube 40 has the same thickness at a portion brought in contact with the mat 61 and portions allowed protrude from the mat 61. Communication holes 44 are shown in Fig. 3. However, it is also allowable that the communication holes 44 are not provided in the same manner as in the first embodiment.

In this arrangement, the longer the distance between the inner tube 40 and the central portion 501 is, the thicker the mat 61 therebetween is. Therefore, the areal size, in which the mat 61 is exposed, is increased at the upstream end and the downstream end of the mat 61, and hence the water is absorbed more easily. If the water stays in a large amount in the mat 61, a certain period of time is required until all of the water is evaporated. Therefore, it is favorable that the mat 61, which exists between the inner tube 40 and the case 50, is thin. However, if the mat 61 is excessively thinned, it is difficult to support the inner tube 40. In view of the above, the distance between the inner tube 40 and the central portion 501 is the minimum distance required to successfully support the inner tube 40. Accordingly, the distance between the inner tube 40 and the central portion 501 is relatively shortened.

On the other hand, if the distance between the inner tube 40 and the case 50 is shortened at the end portion 502 of the accommodating portion 55, it is feared that the electric discharge may arise. Therefore, if the end portion 502 is disposed near to the inner tube 40 in conformity with the central portion 501, the electric discharge may be caused. In view of the above, the distance between the inner tube 40 and the end portion 502 is the distance at which the electric discharge can be avoided. Accordingly, the distance between the inner tube 40 and the end portion 502 is longer than the distance between the inner tube 40 and the central portion 501.

As described above, the required distance to arrive at the inner tube 40 differs between the central portion 501 and the end portion 502 of the accommodating portion 55. Therefore, the inner circumferential surface of the accommodating portion 55 is formed so that the distances, which correspond to the respective requests, are provided at the central portion 501 and the end portion 502 of the accommodating portion 55. It is assumed that the distance from the central axis A to the outer circumferential surface of the case 50, which is provided at the central portion 501, is the same as that provided at the end portions 502. That is, the thickness of the central portion 501 is increased in order that the central portion 501 is disposed near to the inner tube 40. Therefore, the step (difference in distance) is provided between the central portion 501 and the end portion 502.

If the thickness of the central portion 501 is also increased at the position of the hole 54 provided for the case 50, the areal size of the central portion 501, which is exposed to the space 9, is increased. In this situation, it is feared that the electric discharge may arise between the electrode 7 and the central portion 501. Therefore, in this embodiment, the same thickness is provided for the central portion 501 and the end portion 502 around the hole 54. The range, in which the thickness of the central portion 501 is the same as the thickness of the end portion 502, can be previously determined as the range in which the electric discharge can be avoided between the electrode 7 and the central portion 501, by means of, for example, an experiment.

As explained above, according to this embodiment, the mat 61 can be thinned between the inner tube 40 and the case 50. Therefore, it is possible to restrict the water absorbing power of the mat 61. Accordingly, it is possible to shorten the time required to remove the water from the mat 61.

In this embodiment, the thickness of the central portion 501 is increased. However, it is also appropriate that any other member, which does not have the water absorbing property, is attached to the inner circumferential surface of the case 50 in place thereof.

### PARTS LIST

1: electric heating catalyst, 2: exhaust tube, 3: catalyst carrier, 4: inner tube, 5: case, 6: mat, 7: electrode, 8: insulating material, 9: space, 10: electric heating catalyst, 11: electric heating catalyst, 41: central portion, 42: end portion, 43: hole, 51: accommodating portion, 52: tapered portion, 53: tapered portion, 54: hole.

## Claims

1. An electric heating catalyst comprising:
a heat generating element which generates heat by applying electricity;
a case which accommodates the heat generating element;
a mat which is provided between the heat generating element and the case and which insulates the electricity; and
an inner tube which is provided on an inner side as compared with the case and on an outer side as compared with the heat generating element and which is supported by the mat while dividing the mat into a part disposed on a case side and a part disposed on a heat generating element side, wherein:
the inner tube protrudes from the mat; and
distances between the inner tube and the case are provided such that the distance is required to support the inner tube at a portion at which the mat exists, and the distance is required to avoid occurrence of any electric discharge between the inner tube and the case at a portion at which the inner tube protrudes from the mat.

2. The electric heating catalyst according to claim 1, wherein the inner tube has a communication portion which makes communication between the case side and the heat generating element side at a portion at which the inner tube is brought in contact with the mat.

3. The electric heating catalyst according to claim 1 or 2, wherein a thickness of the inner tube is increased at the portion at which the mat exists as compared with the portion at which the inner tube protrudes from the mat.

4. The electric heating catalyst according to any one of claims 1 to 3, wherein a thickness of the case is increased at the portion at which the mat exists as compared with the portion at which the inner tube protrudes from the mat.

5. The electric heating catalyst according to any one of claims 1 to 4, wherein the heat generating element is composed of a material capable of absorbing water.
